# EUROPEAN PATENT APPLICATION

(11) **EP 2 289 346 A1**
(43) Date of publication of application: **02.03.2011**
(21) Application number: 09766436.1
(22) Date of filing: 17.06.2009
(51) Int. Cl.: A23G 3/34

(54) **CANDY AND METHOD OF PRODUCING THE SAME**

(30) Priority: 17.06.2008 JP 2008158548
(71) Applicant: Lotte Co., Ltd., Tokyo 160-0023 (JP)
(72) Inventor: KUROSAKI, Yosuke, Saitama-shi Saitama 336-0027 (JP); KOJIMA, Takayuki, Saitama-shi Saitama 336-0027 (JP); YAMAMOTO, Hiroshi, Saitama-shi Saitama 336-0027 (JP); TAKIGUCHI, Toshio, Saitama-shi Saitama 336-0027 (JP)
(74) Representative: Westendorp | Sommer
(86) International application number: PCT/JP2009/002759
(87) International publication number: WO 2009/153988

(57) **Abstract**

[Problem] The invention provides a candy having a novel crispy texture and a method of production thereof, by controlling physical properties and crystallized states of the candy by preventing the sugar crystallization during forming and accelerating the crystallization after forming in the production of a candy with a high sugar content.

[Means for solving the problem]

The instant invention provides the candy with properties suitable for the production line by suppressing sugar crystallization prior to the forming through the step of quickly cooling the boiled down candy dough in the production of the candy with a high sugar content, comprising the steps of: preparing a candy dough stock solution by mixing sugar, a saccharide(s) other than sugar, and water, and heating the resulting mixture to dissolve; preparing a candy dough by adding a fat(s) and oil(s), emulsifying agent(s), and milk material(s) to the candy dough stock solution, and boiling down the resulting mixture; cooling the boiled-down candy dough; and forming the cooled candy dough.

## Description

### TECHNICAL FIELD

The instant invention relates to a candy and a method of production thereof, specifically a candy of a higher sugar content, which candy has a better formability and a novel texture, and method of producing thereof.

### BACKGROUND OF THE INVENTION

Candy is a collective name for confectionery made primarily from sugar and glucose syrup, which candy is produced by adding milk materials, fats and oils, flavors, colorants, acidulants, seasonings, glucose, coagulants and the like to a sugar solution made by boiling down the sugar and the glucose syrup, followed by the steps such as mixing, forming, and cooling. These candies are grouped into two categories based on their water content: hard candy and soft candy.

There are a variety of types of candies and each has different flavor and texture and the like. For instance, hard candies such as drops and Japanese-style small, spherical-shaped drops called *a-me-da-ma* are consumed by sucking in the mouth while the soft candies like caramels and nougats are moderately chewed in the mouth to enjoy the taste and chewing feelings.

When it comes to "enjoying the texture" of candy's unique physical property, soft candies are chosen for their softness; however, there is a drawback that soft candy is prone to adhere to the teeth due to their softness.

In order to improve the drawback, it has been schemed to mix a variety of quality improving agents to the soft candies to make their textures smoother. Examples include a method of additionally mixing fondants (fine sugar crystals) to the candies to make them less tacky (Patent Literature 1), and methods to mix emulsifying agents (Patent Literatures 2,3). However, although all of them have merely improved the teeth adherence property of the candy, none of them have conferred an innovative texture.

Because soft candies are made from the sugar and the glucose syrup as main ingredients, a higher sugar content results in accelerating sugar crystallization in a production process and significantly hampers the formability, thereby making soft candies with a higher sugar content unsuitable for mass production. Hence, it has hitherto been thought that it is difficult to create a novel texture by increasing the sugar content.

Nonetheless there are increasingly strong demands for candy with a novel texture. The development of such candy has a significant meaning to cultivation of a new market for candy.

Patent Literature 1: Japanese Patent Publication No. 3618718
Patent Literature 2: Japanese Patent Publication No. 3039603
Patent Literature 3: Japanese Laid Open Patent Application (Kokai) HEI No. 5-7459

### DISCLOSURE OF THE INVENTION

### Problems to be Solved by the Invention

The purpose of the instant invention is to provide a method of controlling physical properties and crystallized states of candy with a higher sugar content by preventing the sugar crystallization during forming in the production and crystallizing instead after forming, and candy with a novel texture obtained by employing the method.

### Means to Solve the Problems

In order to solve the problems mentioned above, the present inventors intensively studied to develop candy having suitable properties for a production line by suppressing the sugar crystallization during forming through the quick cooling of the boiled-down candy dough with a higher sugar content.

Accordingly, the instant invention comprises the following constitutions:
(1) A method of producing candy, said method comprising the steps of:
   preparing a candy dough stock solution by mixing sugar, a saccharide(s) other than sugar, and water, and heating the resulting mixture to dissolve;
   preparing a candy dough by adding fat(s) and oil(s), emulsifying agent(s), and milk material(s) to the candy dough stock solution, and boiling down the resulting mixture;
   cooling the boiled-down candy dough; and
   forming the cooled candy dough.
(2) The method according to (1), wherein the solid content weight ratio of the sugar to the saccharide(s) other than the sugar is 70:30 to 90:10.
(3) The method according to (1) or (2), wherein the sugar content in the whole candy dough is not less than 50% by weight.
(4) The method according to any of (1) to (3), wherein the final water content of the candy dough obtained in the step of preparing the candy dough is 5 to 9% by weight.
(5) The method according to any of (1) to (4), wherein sugar crystallization prior to the forming is suppressed by the step of quickly cooling the candy dough obtained in the step of preparing the candy dough using a cooling apparatus set at 5 to 15°C.
(6) The method according to any of (1) to (5), wherein crystallization of the candy dough after the forming is accelerated by adding and mixing seed sugar crystals during the cooling step.
(7) The method according to any of (1) to (6), wherein crystallization after the forming is accelerated by further aging the candy dough after the forming step at a temperature not lower than 25°C.
(8) The method according to any of (1) to (7), crystals with a particle size of not more than 100 µm are uniformly dispersed in the candy dough obtained in the cooling step.
(9) A candy containing sugar and saccharide(s) other than sugar as the main ingredients, which candy is produced by the method according to any of (1) to (8).

### EFFECT OF THE INVENTION

The present invention allows to prevent the sugar crystallization during the forming step and to overcome the problems of the formability in the factory production line, all of which were impossible in the prior art. In addition, because of crystallization after the forming, the invention is able to provide a stable production for candy with an innovative crispy texture.

### BEST MODE FOR CARRYING OUT THE INVENTION

The instant invention is described in detail below.

The sugar used in the invention has a propensity for crystallizing during cooling and forming when the content ratio of the sugar increases, which is an obstacle in the production process, particularly in the forming step.

In addition, the saccharides other than sugar include monosaccharide such as glucose and fructose, disaccharides such as maltose and lactose; oligosaccharides such as glucose syrup and maltodextrin; sugar alcohols such as sorbitol, maltitol, and reduced glucose syrup, and one or more of these can be used. Addition of polysaccharides such as dextrin tends to result in poorer chewy feelings and harden the candy depending on the amount of the polysaccharides added. The glucose syrup affects the hardness and/or a melting property of the candy in the mouth. An increase in the content ratio of the glucose syrup to the sugar enhances sugar's effects on prevention of the crystallization, but makes it difficult to create a texture with high novelty. Accordingly, it is preferred that one or more saccharides selected from the glucose syrup, sorbitol, maltitol, and reduced glucose syrup be properly used in conjunction with the sugar.

The solid content ratio of the sugar used to the saccharides other than the sugar is preferably 70:30 to 90:10. In particular 80:20 to 85:15 is preferred in view of candy's quality and production process.

The content of the sugar in the whole boiled-down candy dough is preferably not less than 50% by weight, more preferably 55 to 60% by weight.

The fats and oils used in the invention are not specifically restricted in physical properties such as the melting points. Examples include animal fats and oils such as milk fats, vegetable fats and oils such as coconut oils, rapeseed oils and hydrogenated oils thereof, and have an influence on candy's taste and flavor, and prevention of teeth adherence.

The emulsifying agents are, as long as being capable of emulsifying fats and oils, not specifically restricted. Examples include edible emulsifying agents such as sucrose fatty acid esters, sorbitan fatty acid esters, monoglycerides, diglycerides, and lecithin. One or more of these may be used.

Condensed milk such as sweetened condensed milk, sweetened condensed skim milk, butter, and fresh cream are used as the milk material, which contribute to better taste as a protein source, affect candy's flavor and color, and are useful in preventing the sugar crystallization.

In addition to the raw materials mentioned above protein components supplementing the candy dough, common salts, antioxidants may be appropriately added.

Further, in order to stably accelerate the sugar crystallization after the forming, a seed sugar crystal such as powdered sugar may be, if necessary, appropriately added, for example, to the extent of 0.2 to 5 % by weight. Yet addition of the seed sugar crystal is not always required. It is one of the options to provide a more stably crystallized candy.

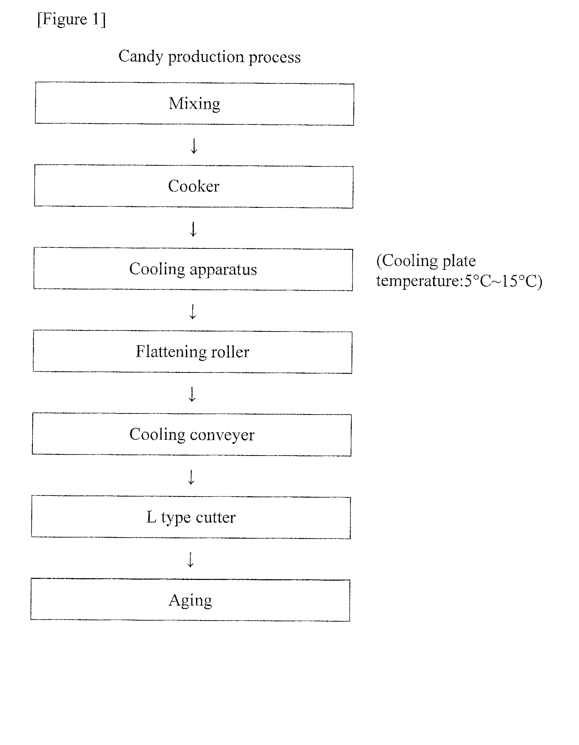

The method of producing the candy of the instant invention comprises the following steps. The outline of the concrete production process is shown in Figure 1.

The first step is the step of adding the raw materials. Water for candy making is first added to the sugar, the saccharide(s) other than the sugar, preferably glucose syrup and sorbitol. The resulting mixture is then mixed under heat until the sugar is dissolved to prepare a candy dough stock solution. Mixing each raw material is carried out, for example, using mixing blades in a steam cooker.

The second step is the step of boiling down the stock solution to prepare a candy dough. The raw materials other than the sugar and the saccharides, including fat and oil, emulsifying agent, milk material and other material (such as a protein component, common salt and antioxidant) are added, and the resulting mixture is boiled down to prepare a candy dough. The water content after the boiling down is preferably 5 to 9% by weight, in particular, the water content of 6 to 8% leads to candy's superior quality with a better texture. For instance, in cases where the water content is less than 5%, the candy dough becomes crumbly, confers a hard texture, and exhibits inferior formability, whereas the water content of more than 9% confers an excessively soft texture and inferior shape retainability. Since the property of the candy largely depends on the water content, temperature and other conditions during the boiling down may be determined in such a way that the water content is within the range described above. Subsequently, as needed, one or more additive(s) such as a flavor are added and the mixture is stirred well.

The third step is the step of quickly cooling the candy dough obtained in the second step. This cooling step is characterized in that sugar crystallization prior to the forming is prevented by the quick cooling using a cooling apparatus set at a low temperature of 5-15°C, such as a cooling plate conditioned with coolant water. A temperature of the dough is adjusted to 20-40°C by this step.

As the fourth step, the seed sugar crystal such as powdered sugar may be, if necessary, added to the extent of 0.2 to 5% by weight. This step is an additive step for accelerating the sugar crystallization after the forming, and for stabilizing the sugar crystallization early. Although absence of this step does not prevent acceleration of the sugar crystallization, it is preferred to carry out this step. Further, this step may be carried out during the third step above.

The fifth step is the step of forming. The dough obtained in the third or fourth step is flattened, cut, and individually wrapped. More specifically, the dough is evenly rolled to uniform thickness with a flatting roller, passed through a cooling conveyer set at a temperature of about 10 to 15°C, and cut to an appropriate size with an L type cutter. Further, these flattening and cutting are repeated depending on an amount of the dough. Further, the appropriately cut doughs are subjected to selection including rejection of the non-standardized. It is then individually wrapped while brought in line, passed again through the cooling conveyer in the individually wrapped state to condition the temperature, and packed into cartons.

The candy dough produced through the cooling step above has a property that the sugar crystallization occurs after the forming owing to its high sugar content.

As the sixth step, in order to accelerate the sugar crystallization more stably, the step of aging the candy at a temperature of not lower than 25°C, almost overnight, may be further added. Because this is the step aiming at accelerating sugar crystallization driven by temperature, there is no specific upper limit of the temperature. Yet, considering satisfactory effects and possibilities of deformation, it is preferred that the step be carried out at a temperature of not higher than 40°C, preferably about 30°C. This is for accelerating the sugar crystallization after the forming and for stabilizing the sugar crystallization early. Although absence of this step does not prevent acceleration of the sugar crystallization, it is preferred to carry out this step.

Crystals with a particle size of not more than 100 µm are uniformly dispersed in the candy dough of accelerated sugar crystallization.

### EXAMPLES

The instant invention is explained in more details by the following examples, which examples are not intend to limit the scope of the invention.

### (Example 1)

Sugar 35 kg, glucose syrup 16 kg, sorbitol 1.8 kg, an appropriate amount of water for candy making were mixed in a tank for candy making and heated while stirring until the sugar was dissolved. The resulting mixture was transferred to a steam cooker and vegetable proteins 180 g, common salt 450 g, vegetable fat and oil 450 g, emulsifying agents 1 kg, specially-selected unsalted butter 7 kg, sweetened condensed milk 36 kg, and antioxidants 9 g were added while heated and stirred, and then boiled down to prepare the candy dough until its water content reaches about 8% by weight.

In addition, 570 g of flavors was added while well stirred to yield the candy dough stock solution. An example of ingredient formulation is shown in table 1 below. Then, in order to avoid the sugar crystallization in the dough, the dough was rapidly cooled using the cooling apparatus set a temperature of 5 to 15°C. While cooled, the dough was added 450 g of powdered sugar as the seed sugar crystal.

The candy dough prepared at a temperature of 25 to 35°C was flattened to about 10 mm in thickness using the flattening roller and then passed through the cooling conveyer set at a temperature of 10 to 15°C, and the cooled dough was cut in shape of a 22 mm x 22 mm square using the cutter.

Subsequently, the obtained candy was subjected to selection, brought in line and individually wrapped using the wrapping apparatus, and further packed into cartons after the cooling step through the cooling conveyer.

The packed samples were allowed to sit at a temperature of about 30°C overnight (for about 16 hours) and readily came to have an entirely crystallized quality.

The solid content ratio shown in Table 1 represents the solid content weight ratio of the sugar to the glucose syrup. Sugar in sweetened condensed milk was included for calculation of the solid content ratio. Sorbitol and lactose contained in milk materials are types of the saccharides but were not included for calculation of the solid content ratio. The ratio was determined using the sugar and the glucose syrup only.

**[Table 1] Ingredient Formulation for Candy Dough**

| Raw material | Ingredient formulation (% by weight) |
|---|---|
| Solid content ratio of sugar to glucose syrup | 82:18 |
| Sugar | 38.6 |
| Glucose syrup | 17.9 |
| Sorbitol | 2.0 |
| Common salt | 0.5 |
| Vegetable protein | 0.2 |
| Vegetable fat and oil | 0.5 |
| Sweetened condensed milk | 40.0 |
| Non-salted butter | 8.0 |
| Emulsifying agent | 1.1 |
| Antioxidant | 0.01 |
| Flavor | 0.6 |
| Powdered sugar | 0.5 |
| Final product (after boiling down) | 100.0 |
| Water content | (about 8.0%) |

### (Comparative Example 1)

Candies were produced under the same condition in the mixing and producing steps described in Table 1 except that the candies were cooled in a relatively mild cooling condition, specifically a cooling condition at room temperature (25°C) using the cooling apparatus, in the cooling step.

### (Experimental Example 1)

The sugar crystallization in the candy obtained in Comparative Example 1 occurred during the forming leading to an uneven candy dough and, particularly, a dough with problems in formability. Specifically, the candy dough became ununiform with a lumpy crystal portion having a fragile property while a less crystallized portion had an adhesive property to the roller and the cutter.

According to this result, it was found that the effective and stable forming requires suppression of crystallization by the rapid cooling.

### (Comparative Example 2)

By altering the sugar content with the ingredient formulation according to Table 1, comparative candies with the following formulation were produced. This is, as comparative examples, to examine qualities of the candy with a value beyond and/or at the upper limit and lower limit specified in the invention, and to confirm the appropriateness of the scope of the claims. The results were summarized in Table 2 below.

**[Table 2] Formulation for Comparative Candy Doughs (Values: % by weight)**

| Raw material | Comparative Example 2-(1) | Comparative Example 2-(2) | Comparative Example 2-(3) | Comparative Example 2-(4) |
|---|---|---|---|---|
| Solid content ratio of sugar to glucose syrup | 65:35 | 70:30 | 90:10 | 95:5 |
| Sugar | 26.8 | 30.3 | 44.2 | 47.7 |
| Glucose syrup | 34.7 | 29.8 | 9.9 | 5.0 |
| Sorbitol | 2.0 | 2.0 | 2.0 | 2.0 |
| Common salt | 0.5 | 0.5 | 0.5 | 0.5 |
| Vegetable protein | 0.2 | 0.2 | 0.2 | 0.2 |
| Vegetable fat and oil | 0.5 | 0.5 | 0.5 | 0.5 |
| Sweetened condensed milk | 40.0 | 40.0 | 40.0 | 40.0 |
| Non-salted butter | 8.0 | 8.0 | 8.0 | 8.0 |
| Emulsifying agent | 1.1 | 1.1 | 1.1 | 1.1 |
| Antioxidant | 0.01 | 0.01 | 0.01 | 0.01 |
| Flavor | 0.6 | 0.6 | 0.6 | 0.6 |
| Powdered sugar | 0.5 | 0.5 | 0.5 | 0.5 |
| Final product (after boiling down) | 100.0 | 100.0 | 100.0 | 100.0 |
| (Water content) | (about 8.0%) | (about 8.0%) | (about 8.0%) | (about 8.0%) |

### (Experimental Example 2)

The formability and shape retainability of the candy obtained with the formulation according to Tables 1 and 2 were evaluated. After aged at a temperature of about 30°C for 16 hours, the candies were sampled and sensorily evaluated for initial chew, melting in mouth after chewing, and teeth adherence. The results were summarized in Table 3.

In the item of formability, the compatibility of the candy in the steps of cooling, flattening, cutting, and wrapping was evaluated. The evaluation standards were as follows: those can be formed with no problems ○; those had more or less problems but able to be formed depending on conditions □; had problems and difficult to be formed ×.

In the item of shape retainability, the property resistant to change in shape by physical forces and/or temperature change was evaluated. The evaluation standards were as follows: those not change in shape or resistant to change ○; those changed in shape easily ×.

In the item of initial chew, the textures of the candy when it was initially put to be chewed was evaluated. The evaluation standards were as follows: those had crispy textures ○; those did not have crispy textures due to little sugar crystallization ×.

In the item of melting in mouth, the melting feeling as the candy was melted in the mouth, in particular whether it has lingering tastes, was evaluated. The evaluation standards were as follows: those melted quickly with no lingering tastes ○; those melted relatively slowly □; those melted slowly with lingering tastes ×.

In the item of teeth adherence, the adhesive property to the teeth while the candy was being chewed was evaluated. The evaluation standards were as follows: those not adhesive to the teeth ○; those have more or less adhesive to the teeth □; those adhesive to the teeth ×.

The results from these tests are shown in Table 3 below. The panel test in the sensory evaluation was carried out with a panel of five monitors.

**[Table 3] Comparison of the quality of the candies obtained having the formulation according to Table 1 and Table 2**

| Raw material | Control (Table 1) | Comparative Example 2-(1) | Comparative Example 2-(2) | Comparative Example 2-(3) | Comparative Example 2-(4) |
|---|---|---|---|---|---|
| Solid content ratio of sugar to glucose syrup | 82:18 | 65:35 | 70:30 | 90:10 | 95:5 |
| Formability | ○ | ○ | ○ | Δ | × |
| Shape retainability | ○ | ○ | ○ | ○ | × |
| Initial chew | ○ | × | ○ | ○ | ○ |
| Melting in mouth | ○ | × | Δ | ○ | Δ |
| Teeth adherence | o | × | Δ | ○ | ○ |

The candy obtained with the ingredient formulation shown in Table 1 had no problems in the formability and shape retainability. In terms of the texture, the candy came to have a crispy texture after the sugar crystallization, and featured superior melting in mouth and little teeth adherence, and was hence able to be evaluated as having an innovative new texture.

The candy obtained with the ingredient formulation according to Comparative Example 2-(1) in Table 2, had no problems in the formability and shape retainability but possessed a notable tacky texture and teeth adherence, and thus was not evaluated as having an attractive new texture.

The candy obtained with the formulation according to Comparative Example 2-(2) in Table 2, had no problems in the formability and shape retainability but compared to the candy obtained with the formulation shown in Table 1, it had lingering tastes. More or less teeth adherence was pointed out. Nonetheless, it was able to be evaluated as having the intended novel texture.

The candy obtained with the formulation according to Comparative Example 2-(3) in Table 2 had a soft property in formability as well as a tacky property. It was found to be producible depending on conditions such as temperature and the water content of the crystals in spite of the fact that the start of the sugar crystallization in some samples during the production was observed. In terms of the texture, it was evaluated as having the intended texture with crispy initial chew, superior melting in mouth, and little teeth adherence. Yet a rough deposit of the sugar crystals was pointed out.

The candy obtained with the formulation according to Comparative Example 2-(4) in Table 2 had a soft property during the forming and was difficult to be handled. It was difficult to suppress the sugar crystallization even by the quick cooling. In addition, its crystallized state was uneven, resulting in a mixture of a lumpy crystal portion and a soft, tacky portion. Although it came to have a notable crispy texture and was evaluated as having intended a novel texture in terms of initial chew and teeth adherence after the cooling step and crystallization, it was judged that continuous, stable forming in the factory line was difficult.

The results above indicated that candy with the ingredient formulation of the instant invention had an innovative, novel texture. Further, according to the tests above, it is preferred that the solid content ratio of the sugar in the saccharides is 70-90%, preferably 80-85%.

These candies have a risk to crystallize during the forming. Yet suppressing such crystallization by the quick cooling during the cooling step enabled the stable candy production.

### INDUSTRIAL APPLICABILITY

The crystallization of the candy of the instant invention, albeit having a very high sugar content, was suppressed during the forming step by the quick cooling immediately after the boiling down, thereby enabling the candy having a novel texture which has been unproducible other than manually to be produced along the factory line and bringing a new application for the current candy market.

### BRIEF DESCRIPTION OF THE DRAWING

Figure 1: A flow table showing the outline of production process for a candy.

## Claims

1. A method of producing a candy, said method comprising the steps of:
preparing a candy dough stock solution by mixing sugar, a saccharide(s) other than sugar, and water, and heating the resulting mixture to dissolve;
preparing a candy dough by adding a fat(s) and oil(s), emulsifying agent(s), and milk material(s) to the candy dough stock solution, and boiling down the resulting mixture;
cooling the boiled-down candy dough; and
forming the cooled candy dough.

2. The method according to claim 1, wherein the solid content weight ratio of said sugar to said saccharide(s) other than said sugar is 70:30 to 90:10.

3. The method according to claim 1 or 2, wherein the sugar content in the whole candy dough is not less than 50% by weight.

4. The method according to any of claims 1 to 3, wherein the finial water content of said candy dough obtained in said step of preparing said candy dough is 5 to 9% by weight.

5. The method according to any of claims 1 to 4, wherein sugar crystallization prior to said forming is suppressed by the step of quickly cooling said candy dough obtained in said step of preparing said candy dough with a cooling apparatus set at 5 to 15°C.

6. The method according to any of claims 1 to 5, wherein crystallization of said candy dough after said forming is accelerated by adding and mixing seed sugar crystals during said cooling step.

7. The method according to any of claims 1 to 6, wherein crystallization after said forming is accelerated by further aging said candy dough after said forming step at a temperature not lower than 25°C.

8. The method according to any of claims 1 to 7, crystals with a particle size of not more than 100 µm are uniformly dispersed in said candy dough obtained in said cooling step.

9. A candy containing sugar and a saccharide(s) other than sugar as main ingredients, which candy is produced by said method according to any of claims 1 to 8.
